(19) **Europäisches Patentamt / European Patent Office / Office européen des brevets**

(11) **EP 1 865 216 B1**

(12) **EUROPEAN PATENT SPECIFICATION**

(45) Date of publication and mention
of the grant of the patent:
**03.12.2008 Bulletin 2008/49**

(51) Int Cl.:
***F16D 3/38*** *(2006.01)*

(21) Application number: **07010910.3**

(22) Date of filing: **01.06.2007**

(54) **Manufacture method for cross joint**

Herstellungsverfahren für ein Kreuzgelenk

Procédé de fabrication pour joint transversal

(84) Designated Contracting States:
**DE FR**

(30) Priority: **05.06.2006 JP 2006155701**

(43) Date of publication of application:
**12.12.2007 Bulletin 2007/50**

(73) Proprietor: **JTEKT Corporation**
**Osaka-shi**
**Osaka 542-8502 (JP)**

(72) Inventor: **Mizuno, Koichiro**
**c/o JTEKT Corporation**
**Osaka-shi**
**Osaka 542-8502 (JP)**

(74) Representative: **Sajda, Wolf E. et al**
**Meissner, Bolte & Partner GbR**
**Postfach 86 06 24**
**81633 München (DE)**

(56) References cited:
**EP-A1- 1 457 696**    **WO-A-96/35059**
**WO-A-20/06114138**    **US-A1- 2001 049 308**
**US-A1- 2004 224 779**    **US-A1- 2005 096 140**

**Description**

FIELD OF THE INVENTION

The present invention relates to a manufacture method for a cross joint. The closest prior art is the patent letter US 2005/096140 A1.

DESCRIPTION OF THE PRIOR ART

One of the vehicle steering systems for steering steerable road wheels such as of automotive vehicles includes a cross joint for tiltably interconnecting a column shaft mounted with a steering wheel and a steering shaft for steering the steerable road wheels via a steering mechanism such as a steering gear box.
The cross joint includes: a cross shaft including four shaft portions projecting in four directions from a periphery of a body portion thereof; a plurality of needle rollers rolling on outer peripheries of the shaft portions; and closed-end cylindrical bearing cups fitted on these needle rollers. Each shaft portion having the bearing cup fitted thereon is fixedly inserted in a bearing hole formed in each of the yokes provided at each of the above shafts. Thus, the cross joint interconnects the yokes of these shafts thereby tiltably interconnecting these shafts.
When transfer torque is increased in such a cross joint, the needle rollers may be caused to slip so that the cross joint may suffer torque transfer failure such as backlash or pulsations. In this cases, therefore, the vehicle steering system may be degraded in steering feeling. In order to solve this problem, the following structure, such as disclosed in Japanese Unexamined Patent Publication No.H11(1999)-148 518, has been proposed in the art.
The structure is constituted such that the bearing cup is decreased in inside diameter by inserting the bearing cup into the bearing hole of the yoke, whereby the needle rollers and the shaft portion of the cross shaft are brought into an interference fit relation.

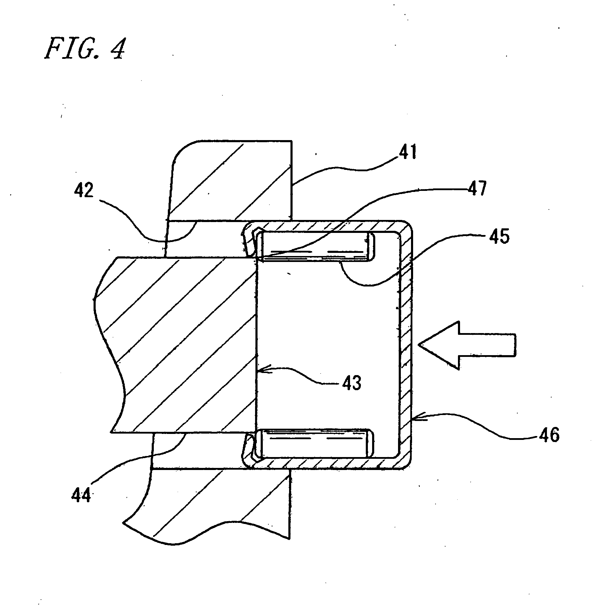

The prior-art cross joint is assembled as follows. In a state where a shaft portion 44 of a cross shaft 43 is inserted in a bearing hole 42 of a yoke 41, as shown in FIG. 4, a bearing cup 46 having a plurality of rolling elements 45 arranged on an inner periphery thereof is moved toward the shaft portion 44 from place axially outwardly of the shaft portion 44.
While the bearing cup 46 is press inserted into the bearing hole 42, the rolling elements 45 in the bearing cup 46 are fitted about the shaft portion 44 via a distal end thereof. This causes the bearing cup 46 to be decreased in diameter, so that the rolling elements 45 and the shaft portion 44 are brought into pressure contact with each other, or into the aforesaid interference fit relation.
However, the following risk exists. The rolling elements 45 on the inner periphery of the bearing cup 46 may be brought into hard contact against a corner 47 of an end face of the shaft portion 44 because the bearing cup 46 is decreased in diameter by the press-insertion into the bearing hole 42 when the rollers 45 in the bearing cup 46 are fitted about the shaft portion 44.
Hence, the outer periphery of the shaft portion 44, which constitutes a rolling contact surface, and the rolling elements 45 may sustain damages (indentation) or deformation. Particularly at the initial stage of the fitting engagement when the rolling elements 45 come into contact with the distal end of the shaft portion 44, the distal end of the shaft portion 44 is susceptible to damages because of a great pressure on a contact surface between the rolling elements 45 and the shaft portion 44. If the rolling contact surface of the shaft portion 44 and the rolling elements 45 sustain damages in this manner, the cross joint may be decreased in durability.

OBJECT AND SUMMARY OF THE INVENTION

It is an object of the invention to provide a method for manufacturing a cross joint adapted to prevent the shaft portion and the rolling elements from being damaged when the bearing cup is assembled to the shaft portion of the cross shaft.

According to the invention, a manufacture method for a cross joint is disclosed, the cross-joint comprising: a cross shaft including four shaft portions projecting in four directions from a periphery of a body portion thereof; a closed-end cylindrical bearing cup fitted about each of the shaft portions via a plurality of needle rollers arranged on an inner periphery thereof; and a pair of yokes each including a pair of arms coaxially formed with bearing holes insertedly receiving the bearing cups and opposing each other, wherein the bearing cup is decreased in diameter by the bearing hole thereby maintaining the needle rollers in an interference fit state between the shaft portion and the bearing cup, the method wherein, provided that a width between a centerline of a distance between the pair of arms and an outside edge of the bearing hole is defined as **D1,** the outside edge located on an outside surface of the arm, that an axial dimension between a distal end of the shaft portion and the centerline is defined as **D2**, the shaft portion placed at a projecting position to project the distal end thereof from the outside edge of the bearing hole by moving the cross shaft for the maximum possible distance in one axial direction of the shaft portion, and that an axial dimension between an opening-side end face of the needle roller axially moved for the maximum possible distance toward a bottom of the bearing cup and an opening-side edge of a contact portion of an outer periphery of the bearing cup is defined as X, the opening-side edge of the contact portion making contact with an inner periphery of the bearing hole when the bearing cup is inserted in the bearing hole, the opening-side meaning the side of an opening of the bearing cup, the method comprising the following steps:

defining the above values to satisfy the following equation (1):

$$D2 - D1 > X \qquad \ldots (1),$$

inserting each shaft portion in the bearing hole of each of the arms,
moving the cross shaft to the projecting position to thereby project the distal end of the shaft portion from the outside edge of the bearing hole of any one of the arms, and
fitting the bearing cup having the plurality of needle rollers arranged on the inner periphery thereof about the shaft portion and also inserting the bearing cup in the bearing hole to thereby interpose between the arm of the yoke and the shaft portion.

According to the manufacture method for cross joint constituted as described above, the above dimensions are so defined as to satisfy the above equation (1). Therefore, when the bearing cup having the needle rollers arranged on the inner periphery thereof is inserted into the bearing hole as being fitted about the shaft portion, the bearing cup allows the needle rollers arranged on the inner periphery thereof to make contact with the shaft portion before the contact portion of the outer periphery thereof reaches the bearing hole.
Then, the bearing cup is fitted about the shaft portion via the needle rollers. When the bearing cup is pressingly moved further in the axial direction, the bearing cup fitted about the shaft portion presents the edge of the contact portion thereof to the inner periphery of the bearing hole. Thus, the bearing cup is inserted in the bearing hole so as to be interposed between the shaft portion and the bearing hole. It is noted here that when the bearing cup is inserted in the bearing hole to make contact therewith, the bearing cup is decreased in diameter so as to bring the needle rollers into the interference fit state.
However, the bearing cup, which is not yet decreased in diameter by the bearing hole, is fitted about the shaft portion and hence, the outer periphery of the shaft portion does not make hard contact against the outside surfaces of the needle rollers. Thus, the outer periphery of the shaft portion and the outside surfaces of the needle rollers may be prevented from being damaged or deformed. As a result, the cross joint 1 may be prevented from being decreased in durability.

BRIEF DESCRIPTION OF THE DRAWINGS

FIG. 1    is a side view showing an essential part of a vehicle steering system employing a cross joint manufactured according to the invention;
FIG. 2    is a sectional view taken on the line II-II in FIG. 1;
FIG. 3    is a diagram showing a state where a cross shaft is moved for the maximum possible distance in one axial direction and the cross shaft and a yoke are fixedly retained at positions; and
FIG. 4    is a diagram for explaining how to manufacture a prior-art cross joint.

DESCRIPTION OF THE PREFERRED EMBODIMENT

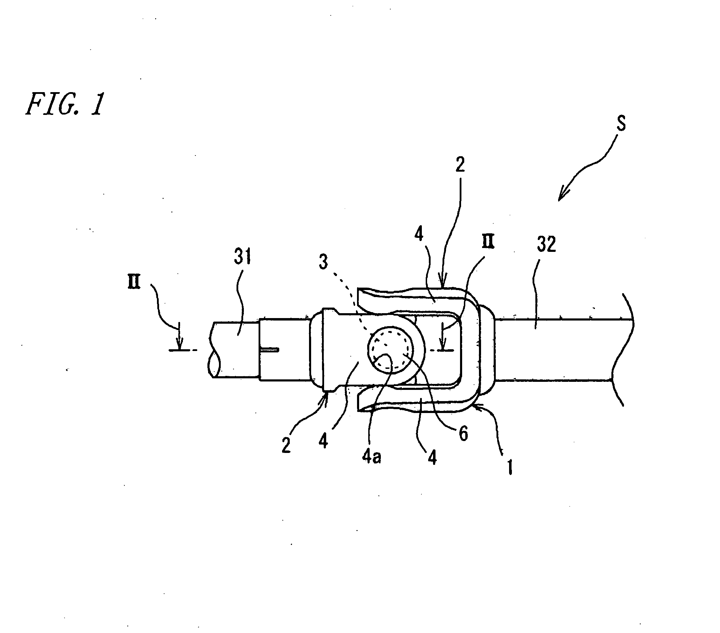

Next, the preferred embodiment of the invention will be described with reference to the accompanying drawings. FIG. 1 is a side view showing an essential part of a vehicle steering system employing a cross joint manufactured according to the invention.
In FIG. 1, the vehicle steering system S is a system for steering steerable road wheels of a vehicle such as an automotive vehicle. The steering system includes: a column shaft 32 mounted with a vehicle steering wheel (not shown) unitarily rotatably; a steering shaft 31 for steering the steerable road wheels via a steering gear box and the like; and a cross joint 1 tiltably interconnecting these shafts 31, 32.

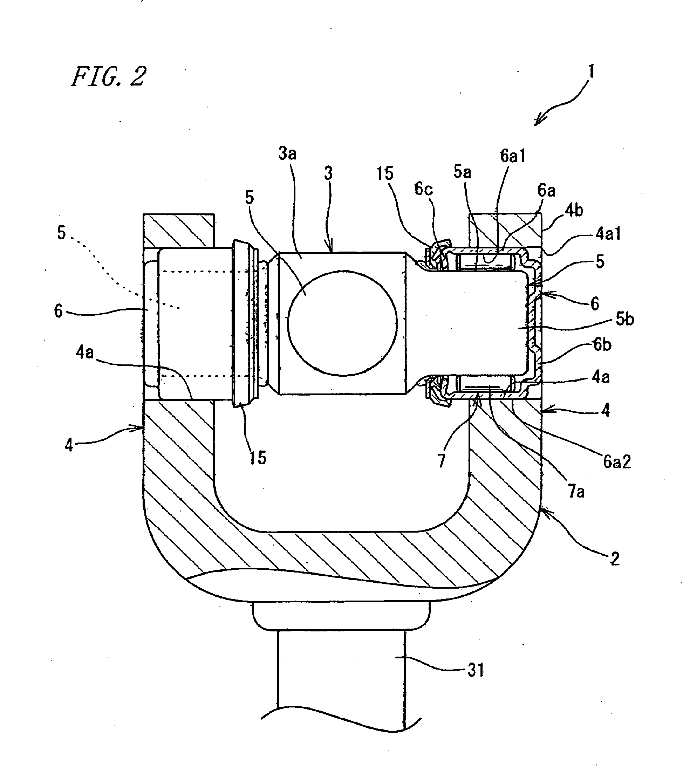

FIG. 2 is a sectional view taken on the line II-II in FIG. 1. In FIG. 2, one of a pair of yokes 2 to be described hereinafter is omitted in the interest of easy understanding. Referring to FIG. 1 and FIG. 2, the cross joint 1 includes:

the respective pair of yokes 2 fixed to a respective end of the steering shaft 31 and the column shaft 32; a cross shaft 3 interconnecting the pair of yokes 2.

The yoke 2 is a U-shaped member formed from a steel sheet or the like and includes a pair of arms 4 opposing each other. Each pair of arms 4 are individually formed with bearing holes 4a in coaxial relation. The yokes 2 are combined with each other in a manner to alternate their arms 4 and are interconnected by means of the cross shaft 3.

The cross shaft 3 includes: a body portion 3a; and four shaft portions 5 projecting in four directions from a periphery of the body portion 3a. The cross shaft 3 is formed from steel and has the body portion 3a and the four shaft portions 5 formed in one piece by forging.

A closed-end cylindrical bearing cup 6 having a plurality of needle rollers 7 arranged on an inner periphery 6a1 thereof is fitted about the shaft portion 5 of the cross shaft 3.

The bearing cup 6 is formed by press working a steel sheet. The bearing cup is shaped like a closed-end cylinder which includes: a cylindrical portion 6a insertedly receiving the shaft portion 5 via the plurality of needle rollers 7 arranged on the inner periphery; and a bottom 6b formed continuous to an end of the cylindrical portion 6a. The plurality of needle rollers 7 interposed between the bearing cup 6 and the shaft portion 5 are formed from a bearing steel or the like.

The needle roller 7 defines a rolling contact surface at an outside surface 7a thereof. The needle rollers 7 are rollably disposed between an inner periphery 6a1 of the cylindrical portion 6a and an outer periphery 5a of the shaft portion 5. An end of the cylindrical portion 6a is formed with a bent portion 6c for fixedly retaining the needle rollers 7 with respect to an axial direction thereof, and is provided with a seal member 15 for closing an opening between the bent portion 6c and the outer periphery 5a of the shaft portion 5.

As fitted about the shaft portion 5, the bearing cup 6 is inserted in each of the bearing holes 4a of the pair of yokes 2. The pair of yokes 2 are interconnected by means of the cross shaft 3 having the bearing cups 6 fitted about the respective shaft portions 5 thereof. That is, the bearing cup 6 having the plurality of needle rollers 7 arranged on the inner periphery thereof is interposed between each of the shaft portions 5 and each of the bearing holes 4a insertedly receiving the shaft portions 5. Hence, the cross shaft 3 and the yokes 2 are free to rotate about the axes of the shaft portions 5.

An outside diameter of the cylindrical portion 6a of the bearing cup 6 is defined such that the bearing cup 6 inserted in the bearing hole 4a of the yoke 2 may maintain the plurality of needle rollers 7 in an interference fit state between the shaft portion 5 and the bearing cup 6. Specifically, the outside diameter of the cylindrical portion 6a is slightly greater than an inside diameter of the bearing hole 4a, so that the bearing cup 6 is slightly decreased in the diameter of the cylindrical portion 6a thereof by being inserted into the bearing hole 4a.

This permits the plurality of needle rollers 7 to have a radial clearance set to a negative clearance with respect to the inner periphery 6al of the bearing cup 6 and the outer periphery 5a of the shaft portion 5, the inner periphery 6al and the outer periphery 5a constituting raceway surfaces on which the needle rollers 7 roll.

According to the cross joint 1 having the above constitution, the pair of yokes 2 fixed to the steering shaft 31 and the column shaft 32 are interconnected by means of the cross shaft 3 rotatable relative to the individual yokes 2 whereby the steering shaft 31 and the column shaft 32 are tiltably interconnected.

Next, a manufacture method for the above cross joint 1 is described. This cross joint 1 is assembled as follows. First, the pair of yokes 2 fixed to the steering shaft 31 and the column shaft 32 are combined with each other in a manner to alternate their arms 4.

Next, each shaft portion 5 is inserted in each of the bearing holes 4a of the pair of yokes 2 and the pair of yokes 2 and the cross shaft 3 are set to positions such that the individual shaft portions 5 and bearing holes 4a may maintain a positional relation equivalent to that in the assembled cross joint 1.

Subsequently, the cross shaft 3 is moved for the maximum possible distance in one axial direction relative to the bearing hole 4a of the yoke 2 such that a distal end 5b of one shaft portion 5 (shaft portion 5 on the right side of the drawing surface) may project from an outside edge 4a1 of the bearing hole 4a, the outside edge 4a1 located on an outside surface 4b of the arm 4.

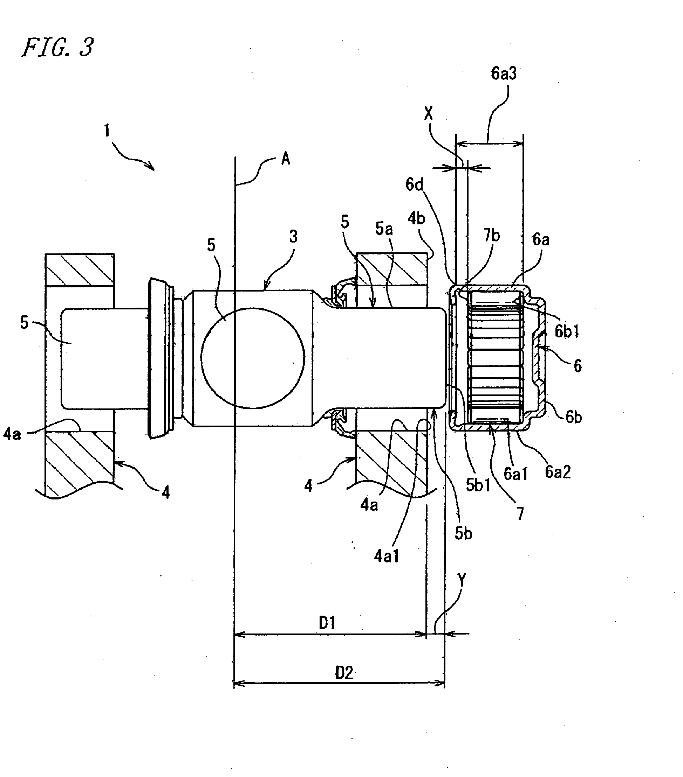

FIG. 3 is a diagram showing a state where the cross shaft 3 is moved for the maximum possible distance in one axial direction as described above and the cross shaft 3 and the yoke 2 are fixedly retained at positions. In order to facilitate the understanding of the invention, FIG. 3 omits one yoke 2 of the pair of yokes 2 and depicts an axial dimension X and such, to be described hereinafter, in an exaggerated form.

Referring to FIG. 3, a jig and the like are used to fixedly retain the cross shaft 3 and the pair of yokes 2 at positions in a manner that the shaft 3 and the pair of yokes 2 have the positional relation equivalent to that in the assembled cross joint 1, as described above. Subsequently, the cross shaft 3 is moved for the maximum possible distance in the one axial direction (in the rightward direction with respect to the drawing surface) and is fixedly retained at a projecting position to project the distal end 5b of the shaft portion 5 from the outside edge 4a1 of the bearing hole 4a.

The projecting position means a position to which the cross shaft 3 with the yoke 2 (not shown) mounted to the shaft portions 5 orthogonal to the drawing surface may be moved for the maximum possible distance in the one axial direction.

The bearing cup 6 shown in FIG. 3 is in proximity to the distal end 5b of the shaft portion 5 so as to be fitted about the shaft portion 5. This bearing cup 6 previously has the plurality of needle rollers 7 arranged on the inner periphery 6a1 thereof. These needle rollers 7 are adherently fixed to the inner periphery 6a1 by way of viscosity of grease or the like, for example, applied to the inner periphery 6a1. On the inner periphery 6a1, the plurality of needle rollers 7 are arranged as axially shifted as far as possible toward the bottom 6b so as to abut against a wall 6b 1 of the bottom 6b.

When the bearing cup 6 is inserted into the bearing hole 4a as will be described hereinafter, the bearing cup 6 substantially has a contact portion 6a3 of an outer periphery 6a2 thereof in contact with an inner periphery of the bearing hole 4a. At this time, an axial dimension between an opening-side end face 7b of the needle roller 7 shown in the figure and an opening-side edge 6d of the contact portion 6a3 of the bearing cup 6 is defined as **X.** The term opening-side as used herein means the side of an opening of the bearing cup 6.

A width between a centerline A of a distance between a pair of arms 4 and the outside edge 4al of the bearing hole 4a is defined as **D1.** An axial dimension between a distal end face 5b1 of the shaft portion 5 placed at the projecting position and the centerline **A** is defined as D2.

At this time, a difference between the above dimensions **D1** and **D2** is an axial dimension **Y** between the distal end face 5b 1 of the shaft portion 5 place at the projecting position and the outside edge 4a1 of the bearing hole 4a. The cross joint 1 of the invention is designed such that the dimensions of the cross shaft 3 and the yoke 2 take the aforementioned values satisfying the following equation (2):

$$Y = D2 - D1 > X \qquad \dots (2).$$

When the cross shaft 3 is fixedly retained at the projecting position as described above, the bearing cup 6 is axially moved to the above shaft portion 5 projecting from the outside edge 4al of the bearing hole 4a so as to fit the bearing cup 6 about the shaft portion 5 and to insert the bearing cup 6 into the bearing hole 4a. Thus, the bearing cup 6 is interposed between the yoke 2 and the shaft portion 5.

At this time, the above values **D1, D2, X** of the cross joint 1 satisfy the above equation. Therefore, when the bearing cup 6 is brought into proximity to the shaft portion 5, as shown in FIG. 3,outer periphery 7a of the needle rollers 7 first make contact with the outer periphery 5a of the shaft portion 5 so that the bearing cup 6 is fitted about the shaft portion 5.

Specifically, the axial dimension Y between the distal end face 5b1 of the shaft portion 5 and the outside surface 4b of the arm 4 is greater than the axial dimension **X** between the end face 7b of the needle roller 7 and the opening-side axial edge 6d of the contact portion 6a3 and hence, the bearing cup 6 is fitted about the distal end 5b of the shaft portion 5 before the contact portion 6a3 of the outer periphery 6a2 thereof reaches the bearing hole 4a.

The above axial dimension **X** is a dimension determined when the needle rollers 7 are moved for the maximum possible distance toward the bottom 6b. Namely, the dimension **X** is the maximum value of a dimension between the end face 7b of the needle roller 7 and the edge 6d of the contact portion 6a3. This ensures that the bearing cup 6 is fitted about the distal end 5b of the shaft portion 5 before the edge 6d of the contact portion 6a3 reaches the bearing hole 4a.

When the bearing cup 6 fitted about the shaft portion 5 as described above is further moved in the axial direction, the contact portion 6a3 of the bearing cup 6 reaches the bearing hole 4a of the arm 4. The bearing cup 6 is inserted into the bearing hole 4 as allowing the contact portion 6a3 thereof to make sliding contact with the inner periphery of the bearing hole 4a.

The bearing cup 6 inserted between the shaft portion 5 and the bearing hole 4a, as described above, is inserted to such a position as that the outside surface 4b of the arm 4 is substantially flush with the bottom 6b, as shown in FIG. 2.

The bearing cup 6 is interposed between the bearing hole 4a of the arm 4 and the shaft portion 5 in the aforementioned manner. In this case, the outside diameter of the cylindrical portion 6a of the bearing cup 6 is defined to be slightly greater than the inside diameter of the bearing hole 4a, as described above, so that the bearing cup 6 is slightly decreased in the diameter of the cylindrical portion 6a thereof by being inserted in the bearing hole 4a. Hence, the needle rollers 7 are brought into the interference fit state between the shaft portion 5 and the bearing cup 6.

A shaft portion 5 on the axially opposite side from the above shaft portion 5 having the above bearing cup 6 mounted thereto is assembled as follows. With a bearing cup 6 mounted to one side of the shaft portion 5, the cross shaft 3 is moved toward the other axial side or to a projecting position where the shaft portion 5 is projected from an outside edge 4a1 of a bearing hole 4a. The bearing cup 6 is inserted and interposed between the shaft portion 5 and the bearing hole 4a in the same way as in the foregoing.

As to the shaft portion 5 orthogonal to the drawing surface, as well, the same procedure is taken to insert and interpose the bearing cup 6 between the shaft portion 5 and the bearing hole 4a.

Thus, the bearing cups 6 are interposed between the four shaft portions 5 and the bearing holes 4a with the shaft portions 5 inserted therein in the aforementioned manner, whereby the cross joint 1 is assembled.

According to the method for manufacturing the cross joint 1 of the invention constituted as described above, the individual dimensions of the cross shaft 3, yoke 2 and bearing cup 6 are so defined as to satisfy the above equation (1). Therefore, when the bearing cup 6 having the needle rollers 7 arranged on the inner periphery 6a1 thereof is inserted into the bearing hole 4a of the arm 4 as being fitted about the shaft portion 5, the bearing cup 6 allows the needle rollers 7 arranged on the inner periphery thereof to make contact with the shaft portion 5 before the contact portion 6a3 thereof reaches the bearing hole 4a.

Then, the bearing cup 6 is fitted about the shaft portion 5 via the needle rollers 7. When the bearing cup 6 is pressingly moved further in the axial direction, the bearing cup 6 fitted about the shaft portion 5 presents the edge 6d of the contact portion 6a3 thereof to the bearing hole 4a. Thus, the bearing cup 6 is inserted in the bearing hole 4a so as to be interposed between the shaft portion 5 and the bearing hole 4a.

It is noted here that when the bearing cup 6 is inserted in the bearing hole 4a to make contact therewith, the bearing cup 6 is decreased in diameter to bring the needle rollers into the interference fit state. According to the embodiment, however, the bearing cup 6, which is not yet decreased in diameter by the bearing hole 4a, is fitted about the shaft portion 5 and hence, the outer periphery 5a of the shaft portion 5 does not make hard contact against the outside surfaces 7a of the needle rollers 7.

Thus, the outer periphery 5a of the shaft portion 5 and the outside surfaces 7a of the needle rollers 7 may be prevented from being damaged or deformed. As a result, the cross joint 1 may be prevented from being decreased in durability.

The method for manufacturing the cross joint according to the invention is not limited to the foregoing embodiment. While the above embodiment illustrates the cross joint wherein the bearing cup 6 has the bent portion 6c formed at the end of the cylindrical portion 6a, the invention is also applicable to a cross joint wherein a bearing cup does not include the above bent portion. So long as a cross joint is constituted to satisfy the above equation (1), the configurations and dimensions of the bearing cup, shaft portion, needle rollers, yoke and the like may be varied as needed.

**Claims**

1.  A manufacture method for a cross joint, the cross joint (1) comprising:

    a cross shaft (3) including four shaft portions (5) projecting in four directions from a periphery of a body portion (3a) thereof;
    a closed-end cylindrical bearing cup (6) fitted about each of the shaft portions (5) via a plurality of needle rollers (7) arranged on an inner periphery thereof; and a pair of yokes (2) each including a pair of arms (4) coaxially formed with bearing holes (4a) insertedly receiving the bearing cups (6) and opposing each other, wherein the bearing cup (6) is decreased in diameter by the bearing hole (4a) thereby maintaining the needle rollers (7) in an interference fit state between the shaft portion (5) and the bearing cup (6),
    the method wherein, provided that a width between a centerline (A) of a distance between the pair of arms (4) and an outside edge (4a1) of the bearing hole (4a) is defined as D1, the outside edge (4a1) located on an outside surface of the arm (4),
    that an axial dimension between a distal end of the shaft portion (5) and the centerline (A) is defined as D2, the shaft portion (5) placed at a projecting position to project the distal end thereof from the outside edge (4a1) of the bearing hole (4a) by moving the cross shaft (3) for the maximum possible distance in one axial direction of the shaft portion (5), and
    that an axial dimension between an opening-side end face (7b) of the needle roller (7) axially moved for the maximum possible distance toward a bottom of the bearing cup (6) and an opening-side edge (6d) of a contact portion (6a3) of an outer periphery of the bearing cup (6) is defined as X, the opening-side edge (6d) of the contact portion (6a3) making contact with an inner periphery of the bearing hole (4a) when the bearing cup (6) is inserted in the bearing hole (4a), the opening-side meaning the side of an opening of the bearing cup (6),

    the method comprising the following steps:

    - defining the above values to satisfy the following equation (1):

$$D2 - D1 > X \qquad \ldots (1),$$

    - inserting each shaft portion (5) in the bearing hole (4a) of each of the arms (4),
    - moving the cross shaft (3) to the projecting position to thereby project the distal end of the shaft portion (5) from the outside edge (4a1) of the bearing hole (4a) of any one of the arms (4), and

- fitting the bearing cup (6) having the plurality of needle rollers (7) arranged on the inner periphery thereof about the shaft portion (5) and also inserting the bearing cup (6) in the bearing hole (4a) to thereby interpose between the arm (4) of the yoke (2) and the shaft portion (5).

## Patentansprüche

1. Verfahren zum Herstellen eines Kreuzgelenks, wobei das Kreuzgelenk (1) folgendes aufweist:

eine Kreuzachse (3), die vier Achsenbereiche (5) aufweist, die von einer Peripherie ihres Körperbereichs (3a) in vier Richtungen wegragen;
eine zylindrische Lagerbuchse (6) mit geschlossenem Ende, die über eine Vielzahl von an einem Innenumfang von dieser angeordneten Nadelrollen (7) um jeden der Achsenbereiche (5) gepaßt ist; und
ein Paar von Jochen (2), von denen jedes ein Paar Arme (4) aufweist, die koaxial mit Lageröffnungen (4a) ausgebildet sind, in die sich die Lagerbuchsen (6) einsetzen lassen und die einander gegenüberliegend angeordnet sind, wobei die Lagerbuchse (6) durch die Lageröffnung (4a) in ihrem Durchmesser vermindert ist und **dadurch** die Nadelrollen (7) in einem Preßsitzzustand zwischen dem Achsenbereich (5) und der Lagerbuchse (6) gehalten sind,
wobei bei dem Verfahren unter der Voraussetzung, daß eine Breite zwischen einer Mittellinie (A) einer Distanz zwischen dem Paar der Arme (4) und einem äußeren Rand (4a1) der Lageröffnung (4a) als D1 definiert ist, der äußere Rand (4a1) an einer äußeren Oberfläche des Arms (4) liegt,
daß eine axiale Abmessung zwischen einem distalen Ende des Achsenbereichs (5) und der Mittellinie (A) als D2 definiert ist, der Achsenbereich (5) in einer vorstehenden Position plaziert ist, so daß das distale Ende von diesem von dem äußeren Rand (4a1) der Lageröffnung (4a) hervorsteht, indem die Kreuzachse (3) über die maximal mögliche Distanz in einer axialen Richtung des Achsenbereichs (5) bewegt wird, und
daß eine axiale Abmessung zwischen einer öffnungsseitigen Stirnseite (7b) der axial über die maximal mögliche Distanz in Richtung auf einen Boden der Lagerbuchse (6) bewegten Nadelrolle (7) und einem öffnungsseitigen Rand (6d) eines Kontaktbereichs (6a3) einer äußeren Peripherie der Lagerbuchse (6) als X definiert ist, der öffnungsseitige Rand (d) des Kontaktbereichs (6a3) mit einem Innenumfang der Lageröffnung (4a) in Kontakt tritt, wenn die Lagerbuchse (6) in die Lageröffnung (4a) eingesetzt wird, wobei unter der Öffnungsseite die Seite einer Öffnung der Lagerbuchse (6) zu verstehen ist,
wobei das Verfahren folgende Schritte aufweist:

- Definieren der vorstehend genannten Werte derart, daß sie die nachfolgende Relation (1) erfüllen:

$$D2 - D1 > X \qquad \qquad ...(1),$$

- Einsetzen jedes Achsenbereichs (5) in die Lageröffnung (4a) von jedem der Arme (4),
- Bewegen der Kreuzachse (5) in die hervorstehende Position, so daß das distale Ende des Achsenbereichs (5) von dem äußeren Rand (4a1) der Lageröffnung (4a) von einem beliebigen der Arme (4) hervorsteht, und
- Passen der Lagerbuchse (6), an deren Innenumfang die Vielzahl von Nadelrollen (7) angeordnet ist, um den Achsenbereich (5) sowie Einsetzen der Lagerbuchse (6) in die Lageröffnung (4a), so daß diese zwischen dem Arm (4) des Jochs (2) und dem Achsenbereich (5) angeordnet ist.

## Revendications

1. Procédé de fabrication pour un joint transversal, le joint transversal (1) comprenant :

- un arbre transversal (3) comprenant quatre parties d'arbre (5) faisant saillie dans quatre directions à partir d'une périphérie d'une partie de corps (3a) de celui-ci ;
- une cuvette de roulement cylindrique à extrémité fermée (6) ajustée autour de chacune des parties d'arbre (5) par l'intermédiaire d'une pluralité d'aiguilles (7) agencées sur une périphérie intérieure de celle-ci ;
- et une paire de fourches (2) comprenant chacune une paire de bras (4) formés coaxialement avec des orifices de palier (4a) recevant par insertion les cuvettes de roulement (6) et se faisant face l'un à l'autre, dans lequel le diamètre de la cuvette de roulement (6) est réduit par l'orifice de palier (4a) afin de maintenir les aiguilles (7) dans un état d'ajustement avec serrage entre la partie d'arbre (5) et la cuvette de roulement (6),

le procédé dans lequel, à condition qu'une largeur entre une ligne centrale (A) située à une distance entre la paire de bras (4) et un bord extérieur (4a1) de l'orifice de palier (4a) est définie comme D1, le bord extérieur (4a1) étant disposé sur une surface extérieure de l'arbre (4),

- qu'une dimension axiale entre une extrémité distale de la partie d'arbre (5) et la ligne centrale (A) est définie comme D2, la partie d'arbre (5) étant placée dans une position saillante afin que l'extrémité distale de celle-ci fasse saillie à partir du bord extérieur (4a1) de l'orifice de palier (4a) en déplaçant l'arbre transversal (3) sur la distance maximum possible dans une direction axiale de la partie d'arbre (5), et

- qu'une dimension axiale entre une face d'extrémité de côté d'ouverture (7b) de l'aiguille (7) déplacée de façon axiale afin que la distance vers un fond de la cuvette de roulement (6) soit le maximum possible et un bord de côté d'ouverture (6d) d'une partie de contact (6a3) d'une périphérie extérieure de la cuvette de roulement (6) est définie comme X, le bord de côté d'ouverture (6d) de la partie de contact (6a3) entrant en contact avec une périphérie intérieure de l'orifice de palier (4a) lorsque la cuvette de roulement (6) est insérée dans l'orifice de palier (4a), le côté ouverture signifiant le côté d'une ouverture de la cuvette de roulement (6),

le procédé comprenant les étapes suivantes consistant à :

- définir les valeurs ci-dessus pour satisfaire l'équation suivante (1) :

$$D2 - D1 > X \qquad ...(1)$$

- insérer chaque partie d'arbre (5) dans l'orifice de palier (4a) de chacun des bras (4),
- déplacer l'arbre transversal (3) jusqu'à la position saillante afin que l'extrémité distale de la partie d'arbre (5) fasse saillie à partir du bord extérieur (4a1) de l'orifice de palier (4a) de l'un quelconque des bras (4), et
- ajuster la cuvette de roulement (6) possédant la pluralité d'aiguilles (7) agencées sur la périphérie intérieure de celle-ci autour de la partie d'arbre (5) et également insérer la cuvette de roulement (6) dans l'orifice de palier (4a) pour ainsi s'interposer entre le bras (4) de la fourche (2) et la partie d'arbre (5).

FIG. 1

EP 1 865 216 B1

*FIG. 2*

FIG. 3

FIG. 4

**EP 1 865 216 B1**

**REFERENCES CITED IN THE DESCRIPTION**

**Patent documents cited in the description**

- US 2005096140 A1
- JP H111999148518 A